Europäisches Patentamt

European Patent Office

Office européen des brevets

(19)

(11) Veröffentlichungsnummer: **0 363 692**

**A2**

(12) **EUROPÄISCHE PATENTANMELDUNG**

(21) Anmeldenummer: 89117337.9

(22) Anmeldetag: 20.09.89

(51) Int. Cl.⁵: **B60R 9/042 , B60R 9/10**

(30) Priorität: 10.10.88 DE 3834360

(43) Veröffentlichungstag der Anmeldung:
18.04.90 Patentblatt 90/16

(84) Benannte Vertragsstaaten:
AT BE CH DE ES FR GB GR IT LI LU NL SE

(71) Anmelder: UMAREX GmbH & Co. KG
Sportwaffenfabrik
Donnerfeld 2 Postfach 2720
D-5760 Arnsberg 1(DE)

(72) Erfinder: Wonisch, Franz
Donnerfeld 2
D-5760 Arnsberg 1(DE)
Erfinder: Emde, Dietmar
Boenningshausenweg 7
D-5760 Arnsberg(DE)
Erfinder: Müller, Willi
Glindeplatz 4
D-3538 Marsberg(DE)

(54) **Kraftfahrzeugdachträger.**

(57) Mit der Erfindung wird ein Kraftfahrzeugdachträger (3) für ein Kraftfahrzeug (1) vorgeschlagen, der
eine Vorrichtung (2) zum Be- und Entladen von
Gütern auf den Dachträger (3) erlaubt. Die Besonderheit dieses Kraftfahrzeugdachträgers besteht darin, daß ein Schwenk- und Kipplager (10) auf einen in
Verlängerung eines ersten Querholms einsetzbaren
Hilfsträger (17) einfach aufsetzbar ist. Auf diesem
Hilfsträger (17) ist das Schwenk- und Kipplager bis
auf den Querholm verschiebbar. Diese Konstruktion
erlaubt es, daß beispielsweise die Beladung des
Dachträgers (3) mit einem Fahrrad (6) einfach von
einer auf dem Boden neben dem Kraftfahrzeug liegenden Längsschiene (7) möglich ist.

FIG. 1

EP 0 363 692 A2

# Kraftfahrzeugdachträger

Die Erfindung betrifft einen Kraftfahrzeugdachträger, der gleichzeitig eine Vorrichtung zum Be- und Entladen von Gütern auf dem Dachträger aufweist, wobei die Ladevorrichtung aus einer Verlängerungsschiene und der auf den Querholmen des Dachträgers aufliegenden Längsschiene besteht, die mit einem ersten Auflager auf einem ersten Querholm schwenk-und kippbar gelagert und mit einem zweiten Auflager auf einem zweiten Querholm lösbar befestigt ist.

Ein Kraftfahrzeugdachträger der vorgenannten Art ist durch die DE 34 47 665 A1 bereits bekannt. Bei diesem bekannten Autodach-Fahrradständer, der gleichzeitig als Vorrichtung für die Verladung der zu transportierenden Fahrräder benutzt wird, verbleibt der das Fahrrad aufnehmende Längsträger mit seinem vorderen Ende auf dem vorderen Querholm des Dachträgers kipp- und schwenkbar befestigt, während das hintere Ende mit dem Verlängerungsstück neben dem Fahrzeug bis zum Erdboden geführt wird, so daß eine schiefe Ebene entsteht. Von Nachteil bei dieser bekannten Vorrichtung ist es, daß ein für den Transport vorgesehenes Fahrrad auf der schiefen Ebene bis in eine vordere Haltegabel hochgeschoben werden muß. Das Hochschieben des Fahrrades und das in der oberen Endstellung auf der schiefen Ebene zu befestigende Fahrrad erfordern Kraft und Geschicklichkeit, die nicht bei allen Verkehrsteilnehmern vorausgesetzt werden kann.

Ausgehend von diesem vorgenannten Stand der Technik ist es deshalb Aufgabe der Erfindung, einen Kraftfahrzeugdachträger zu schaffen, bei welchem das Beladen durch eine Ladevorrichtung vorgenommen wird, die sich neben dem Kraftfahrzeug auf dem Erdboden befindet und das Aufheben auf den Dachträger ohne besondere Kraftanstrengung auch von schwächeren Personen einfach möglich ist.

Diese Aufgabe wird erfindungsgemäß dadurch gelöst, daß das Schwenk- und Kipplager auf einen in Verlängerung des oder parallel zum ersten Querholm einsetzbaren Hilfsträger aufsetzbar und in dessen Längsachse parallel zum oder auf dem Querholm bis gegen einen Anschlag verschiebbar und in der Endstellung verriegelbar ist.

Der besondere Vorteil dieser Einrichtung besteht darin, daß beispielsweise ein Fahrrad in die auf dem Erdboden neben dem Kraftfahrzeug aufliegende Längsschiene eingeschoben und in ihr befestigt werden kann. Dabei befindet sich unter der Längsschiene bereits das Schwenk- und Kipplager, welches einfach auf einen Hilfsträger aufsetzbar ist, der sich in Verlängerung des entsprechenden Querholms oder in einer Ebene parallel zu diesem ersten Querholm des Dachträgers lösbar befindet. Die gleichzeitig an die Längsschiene angebaute Verlängerungsschiene führt bei dem Hochheben des vorderen Endes der beladenen Führungsschiene zu einer entscheidenden Gewichtsreduzierung. Da das Schwenk- und Kipplager einfach in den Hilfsträger eingreift und keine weiteren Befestigungen oder Arretierungen notwendig sind, ist die gesamte Handhabung denkbar einfach. Hinzu kommt noch, daß aufgrund der Hebelübersetzung mit der Verlängerungsschiene die Gewichtsreduzierung gerade im Auflagepunkt auf den Hilfsträger am größten ist, was an dieser entscheidenden Stelle besonders wichtig ist. Danach wird die Verlängerungsschiene zusammen mit der Längsschiene hochgehoben und quer auf den hinteren Querholm geschwenkt und lose aufgelegt. Nach dem Einschieben des Schwenk- und Kipplagers auf den vorderen Querholm erfolgt die Befestigung der Längsschiene sowohl auf dem vorderen wie auf dem hinteren Querholm.

In Ausbildung der Erfindung kann das Schwenk- und Kipplager mit einer Halteeinrichtung für Güter vorgesehen sein.

Ferner kann das Schwenk- und Kipplager aus einem hohlzylindrischen Grundkörper bestehen, der eine parallel zur Längsachse verlaufende untere Öffnung von weniger als 180° Öffnungswinkel aufweist und auf seiner der Öffnung diametral entgegengesetzten Oberfläche eine Lagerplatte besitzt, die um eine senkrecht zur Längsachse des Grundkörpers angeordnete Drehachse schwenkbar ist und auf ihrer dem Grundkörper abgewandten Oberfläche eine Halteeinrichtung enthält. Der Grundkörper kann dabei auf einem rohrförmigen Querholm oder einem auf dem Querholm befestigten rohrförmigen Träger bis gegen einen Endanschlag längsverschieblich gelagert und arretierbar sein, wobei in den rohrförmigen Träger von der offenen Stirnseite her der Hilfsträger mit einem zylindrischen Ansatz einsetzbar ist, der einen radial vorstehenden Raststift für den Eingriff in eine korrespondierende Nut des rohrförmigen Trägers aufweist und in axialer Verlängerung des Ansatzes einen Zylinderkörper besitzt, dessen Aussendurchmesser dem des rohrförmigen Trägers entspricht und der mit zumindest einer Längsfläche versehen ist, die im eingerasteten Zustand des Raststiftes senkrecht zur Längsachse des Zylinderkörpers angeordnet ist.

In noch weiterer Ausbildung der Erfindung kann die Arretierung des Schwenk- und Kipplagers auf dem rohrförmigen Träger durch eine federunterstützte Schraube erfolgen, die unverlierbar in einer Öffnung des Grundkörpers gehalten und mit einer im rohrförmigen Träger eingesetzten Haltemutter festspannbar ist.

Zwischen der Lagerplatte und dem Grundkörper kann eine mit dem Grundkörper fest verbundene zweite Platte eingesetzt sein, welche die Drehachse für die Lagerplatte aufnimmt.

Mit diesen Ausbildungen besteht der Hilfsträger aus einem zylindrischen Körper mit zumindest einer Längsfläche, auf die das Schwenk- und Kipplager einfach absetzbar ist. Nach dem erfolgten Absetzen ist bereits eine sichere Halterung des Schwenk- und Kipplagers einschließlich der Längsschiene und einem auf der Längsschiene befestigten Transportgut so festgehalten, daß ein Kippen nicht mehr erfolgen kann. Dies wird insbesondere durch die Längsöffnung unter dem Grundkörper des Schwenk- und Kipplagers gewährleistet, die einen Öffnungswinkel von weniger als 180° besitzt. Dadurch umgreift der Grundkörper den Hilfsträger, was aufgrund der Längsfläche des Hilfskörpers möglich ist. Die über den Raststift erfolgte Arretierung des Hilfsträgers sorgt für eine sichere Position des Hilfsträgers in Verbindung mit dem rohrförmigen Träger.

Die Verlängerungsschiene kann entsprechend einem weiteren Merkmal der Erfindung mit ihrem vorderen Ende mit der Längsschiene arretierbar sein und am freien hinteren Ende einen Ständer aus zwei wahlweise einklappbaren Stützfüßen aufweisen. Diese Stützfüße heben die Verlängerungsschiene zusammen mit der Führungsschiene ein wenig vom Boden ab und erleichtern damit das Anheben der Verlängerungsschiene. Durch die an den Stützfüßen angebrachten Gleiter ist außerdem ein eventuell notwendiges Verschieben der Ladevorrichtung in Längsachse des Kraftfahrzeuges möglich, um das Schwenk- und Kipplager sicher in den vorderen rohrförmigen Träger einzufügen.

Die Befestigung des zweiten Auflagers der Längsschiene kann durch ein stufenförmig abgewinkeltes Halteblech erfolgen, dessen untere Stufe unter den Querholm des Dachträgers greift, während die obere Stufe gegen Federkraft an einen mit der Längsschiene verbundenen Aufnahmeblock durch eine unverlierbare Schraube befestigbar ist, wobei der Aufnahmeblock gegenüber dem Halteblech parallel zur Längsschiene innerhalb der Abmessungen eines Langloches verschiebbar ist.

Weitere Einzelheiten und Vorteilsangaben sind in der nachfolgenden Zeichnungsbeschreibung erläutert, die sich auf ein Ausführungsbeispiel bezieht. Es zeigen:

Fig. 1 ein Kraftfahrzeug in der Seitenansicht mit einer davor angeordneten Vorrichtung zum Be- und Entladen eines Fahrrades

Fig. 2 das Kraftfahrzeug gemäß Fig. 1 mit der auf den vorderen Querholm des Dachträgers aufliegenden Ladevorrichtung

Fig. 3 eine Draufsicht auf das Kraftfahrzeug nach Fig. 1 mit seitlich angeordneter Ladevorrichtung

Fig. 4 eine Draufsicht auf das Kraftfahrzeug nach Fig. 1 mit auf den hinteren Querholm des Dachträgers aufgesetzter Längsschiene

Fig. 5 die Draufsicht auf ein Kraftfahrzeug nach Fig. 1 mit insgesamt vier auf dem Kraftfahrzeugdachträger geladenen Fahrrädern

Fig. 6 eine schematische Darstellung der Längsschiene mit angeschlossener Verlängerungsschiene in Position auf den Auflagern

Fig. 7 eine perspektivische Darstellung der Schwenk- und Kippachse

Fig. 8 das hintere Auflager in Seitenansicht entsprechend dem Kreis VIII in Fig. 6

Fig. 9 eine Ansicht auf das hintere Auflager gemäß dem Pfeil IX in Fig. 8

Fig. 10 Fig. 12 die hintere Fußstütze gemäß dem Kreisring X in Fig. 6 in der Ansicht

Fig. 11 eine Seitenansicht gemäß dem Pfeil XI in Fig. 10

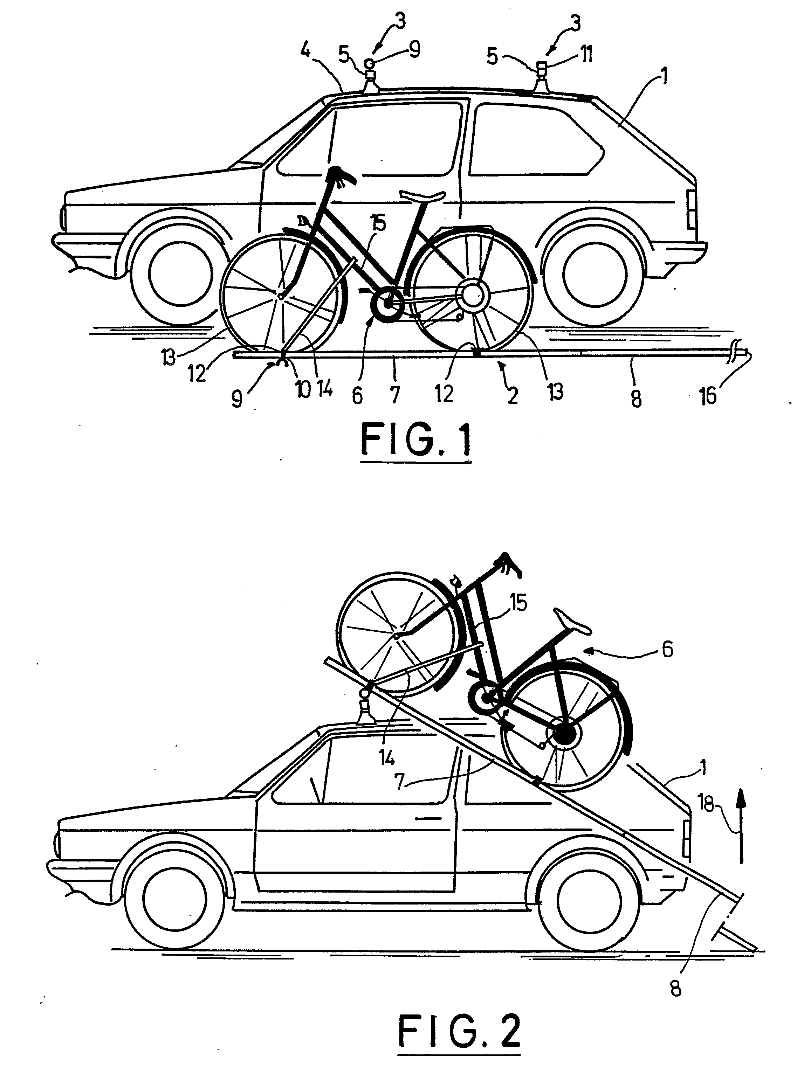

In den Figuren 1 bis 5 ist der Beladevorgang des Kraftfahrzeugdachträgers mit einem Fahrrad in schematischer Weise dargestellt. So zeigt Fig. 1 ein Personenkraftfahrzeug 1 in der Seitenansicht. Vor dem Personenkraftfahrzeug 1 befindet sich auf dem Boden liegend und in paralleler Ausrichtung zur Längsachse des Personenkraftfahrzeuges 1 die Vorrichtung 2 zum Be- und Entladen von Gütern auf bzw. von dem Dachträger 3, der in Form von zwei im parallelen Abstand zueinander auf dem Kraftfahrzeugdach 4 befestigten Querholmen 5 gebildet ist.

Die Vorrichtung 2 zum Be- und Entladen von Gütern, beispielsweise einem Fahrrad 6, besteht im wesentlichen aus einer Längsschiene 7 und einer mit ihr lösbar verbundenen Verlängerungsschiene 8. Unter der Längsschiene 7, die ebenso wie die Verlängerungsschiene 8 von im wesentlichen U-förmigem Profil ist, befindet sich an dem einen Ende ein Auflager 9 mit einem Schwenk- und Kipplager 10 und am anderen Ende ein zweites Auflager 11.

Das zu transportierende Fahrrad 6 wird gemäß Fig. 1 in die Längsschiene 7 eingeschoben und dort in üblicher Weise mit Klammern 12 über Radfelgen 13 und einer Haltegabel 14 zur Halterung des Rahmens 15 befestigt.

Nach der so vorgenommenen Befestigung des Fahrrades 6 in der Vorrichtung 2 wird das Fahrrad vorne mitsamt der Längsschiene 7 und Verlängerungsschiene 8 bis in Höhe des vorderen Querholms 5 hochgehoben und auf einem zu diesem axial verlängerten Hilfsträger 17 aufgelegt. Das Hochheben verursacht auch schwächeren Personen, wie Frauen und Kindern, keine Schwierigkeiten, weil es sich um ein Kippen um den Endpunkt 16 der Verlängerungsschiene 8 handelt. Aufgrund des Hebelgesetzes wird das Anheben der Last mit zunehmendem Winkel zwischen dem Erdboden und der Vorrichtung 2 leichter.

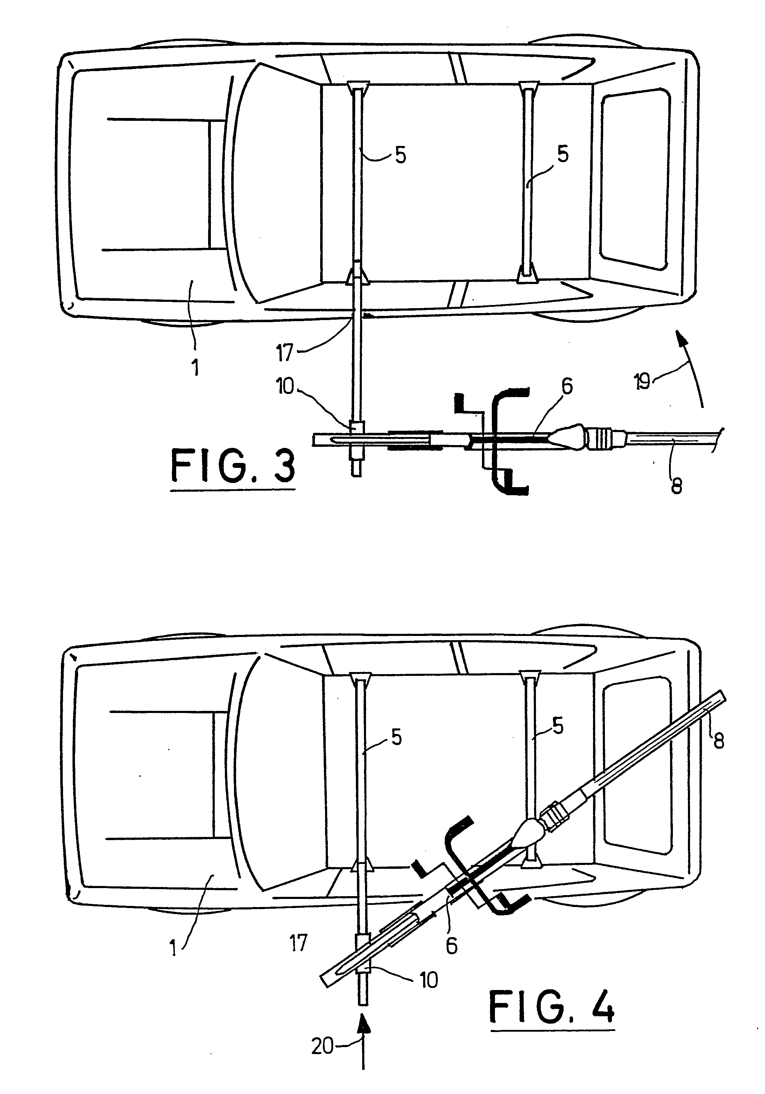

In Fig. 2 ist die Vorrichtung 2 für die Be- und Entladung des Fahrrades 6 bereits auf den vorderen Hilfsträger 17 aufgesetzt. Entsprechend dem Pfeil 18 in Fig. 2 wird nun die Verlängerungsschiene 8 ebenfalls hochgehoben und dann über das Schwenk- und Kipplager 10 seitlich auf den hinteren Querholm 5 des Dachträgers 3 aufgelegt. Das Einschwenken der Verlängerungsschiene 8 wird gemäß dem Pfeil 19 in Fig. 3 vorgenommen.

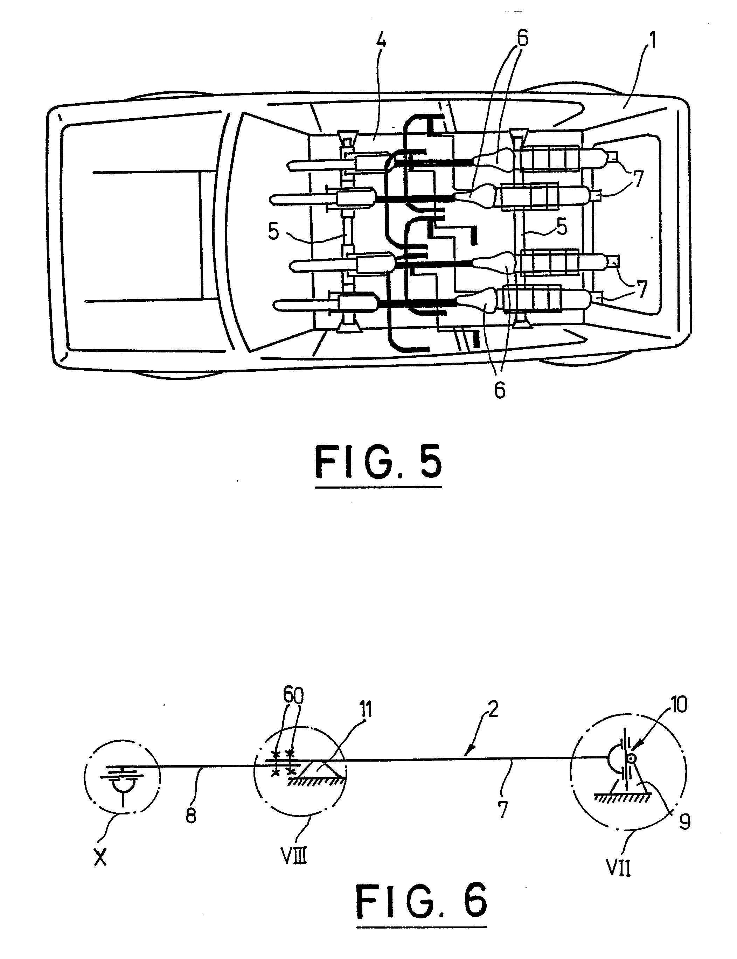

Die Situation der auf dem hinteren Querholm aufgelegten Vorrichtung 2 mit der Verlängerungsschiene 8 zeigt die Fig. 4. Aus dieser Position gemäß Fig. 4 wird nun das Schwenk- und Kipplager 10 über den Hilfsträger 17 bis auf den vorderen Querholm 5 in Pfeilrichtung 20 verschoben. Die Endsituation zeigt Fig. 5, in welcher in der Draufsicht auf ein Kraftfahrzeug 1 insgesamt vier Fahrräder 6 installiert sind. Die Verlängerungsschienen 8 sind jeweils von den Längsschienen 7 getrennt und der Hilfsträger 17, der von beiden Stirnseiten des vorderen Querholms 5 einführbar ist, ist ebenfalls entfernt worden. Die Längsschienen 7 werden auf den Querholmen 5 arretiert. Die in dem Beispiel der Figuren 1 bis 5 gezeigten Fahrrad-Güter sind bereits bei Einführung in die Vorrichtung 2 zur Be- und Entladung befestigt worden, so daß eine weitere Arretierung dieser Fahrräder 6 auf dem Fahrzeugdach 4 nicht mehr notwendig ist.

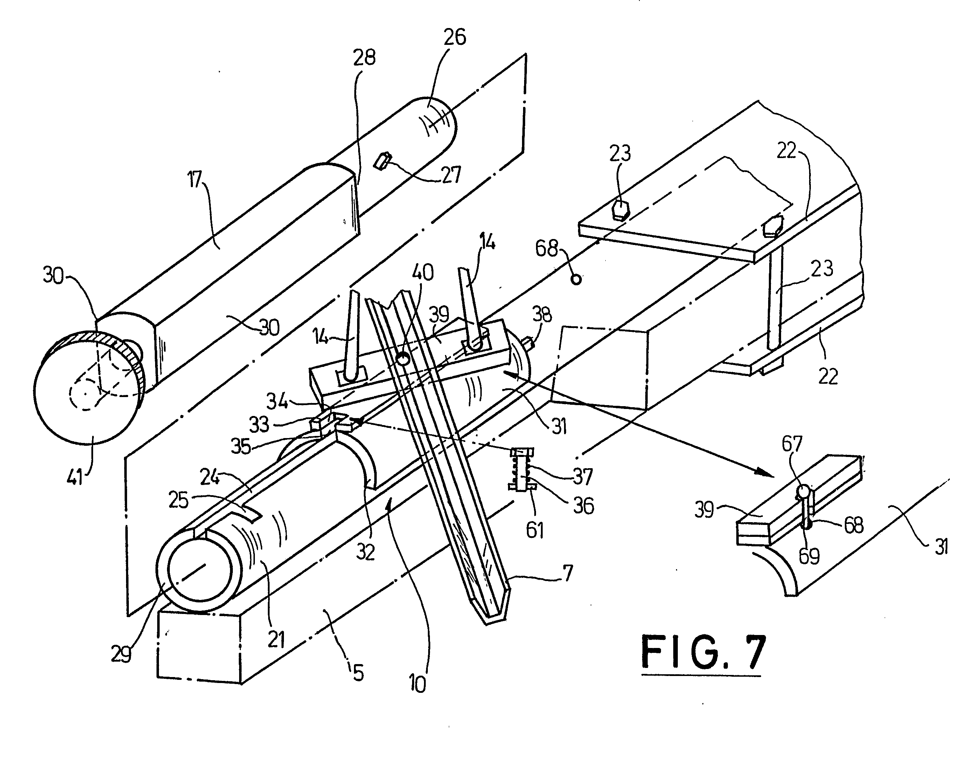

Die Fig. 7 zeigt nun in schematischer Darstellung und teilweise in Explosionsansicht das Schwenk-/Kipplager 10 auf einem Querholm 5 des Dachträgers 3. Diese Konstruktion des zusätzlich auf dem Querholm 5 aufgebrachten und befestigten rohrförmigen Querholms 21 ist für den Fall vorgesehen, daß bereits bestehende PKW-Dachträger 3 mit üblichen Querholmen 5 verwendet werden sollen und die Vorrichtung zur Be- und Entladung von Dachlasten zusätzlich montiert werden soll. An die Stelle des Querholms 5 des üblichen Dachträgers 3 ist selbstverständlich auch möglich, den rohrförmigen Querholm 21 eines völlig neuen Dachträgers 3 zu setzen. Die Befestigung des rohrförmigen Querholms 21 auf dem Querholm 5 kann durch eine Klemmvorrichtung vorgenommen sein, die gemäß Fig. 7 aus einer oberen und unteren Scheibe 22 gebildet ist, die beide durch mehrere Schrauben 23 fest miteinander verbunden sind. Auf diese Weise wird der rohrförmige Querholm 21 unverrückbar auf den Querholm 5 festgeklemmt.

Der rohrförmige Querholm besitzt eine obere Längsnut 24 von der ausgehend eine Quernut 25 im Mantel des Querholms 21 eingebracht ist. Für den Be- und Entladevorgang wird der Hilfsträger 17 mit seinem vorderen zylindrischen Ansatz 26 in das Innere des rohrförmigen Querholms 21 eingeschoben und der Raststift 27 durch leichte Drehung des Hilfsträgers 17 in die Quernut 25 eingeführt. Dadurch ist der Hilfsträger 17 gegen axiale Verschiebung gesichert. In dieser geschilderten Position liegt die Schulterfläche 28 an der vorderen Stirnseite 29 des rohrförmigen Querholms 21 an. Der Außendurchmesser des Hilfsträgers 17 entspricht dem Außendurchmesser des Querholms 21, wobei der Hilfsträger zu beiden Seiten Längsflächen 30 aufweist, um dadurch ein einfaches Aufsetzen des hohlzylindrischen Grundkörpers 31 des Schwenk- und Kipplagers 10 zu ermöglichen.

Der hohlzylindrische Grundkörper 31 des Schwenk- und Kipplagers 10 besitzt eine untere und parallel zu seiner Längs achse verlaufende Öffnung 32 mit einem Öffnungswinkel, der weniger als 180° aufweist. Damit umgreift der Grundkörper 31 den rohrförmigen Querholm 21 um mehr als 180°.

Auf dem Grundkörper 31 ist eine erste Lagerplatte 33 befestigt, die sich in Richtung der Längsachse des Grundkörpers 31 erstreckt. Diese erste Lagerplatte hat an der vorderen Stirnseite eine Nut 34, die mit einer Nut 35 im Grundkörper 31 und der Nut 24 des Querholms 21 deckungsgleich ist. In diese deckungsgleichen Nuten ist eine unverlierbare Schraube 36 eingesetzt, die unter der Wirkung einer Feder 37 steht und ein Befestigen des Grundkörpers 31 in der gegen einen Anschlag 38 geschobenen Endstellung auf dem rohrförmigen Querholm 21 erlaubt.

Der hohlzylindrische Grundkörper 31 stellt das Grundelement für das Kipplager 10 dar, wenn der Grundkörper 31 sich auf dem Hilfsträger 17 befindet und auf dem rohrförmigen Querholm 21 durch die Schraube 36 noch nicht arretiert ist. Durch die Arretierung ist der Grundkörper in seiner eingenommenen Position festgestellt, so daß ein Kippen der Längsschiene 7 in dieser Position nicht mehr möglich ist. Auf der ersten Lagerplatte 33 befindet sich eine zweite Lagerplatte 39, die über die zentral angeordnete Drehachse 40 auf der ersten Lagerplatte 33 schwenkbar ist. Auf der zweiten Lagerplatte ist die Halteeinrichtung 14 befestigt. Über die zweite Lagerplatte 39 und die zentrale Drehachse 40 erfolgt das Einschwenken der Führungsschiene 7 aus einer Schräglage in eine parallele oder nahezu parallele Achse zur Längsrichtung des Fahrzeuges 1.

Nach dem Arretieren des Grundkörpers 31 auf dem rohrförmigen Querholm 21 wird der Hilfsträger 17 aus seiner Arretierung 25, 27 herausgedreht und aus dem Querholm 21 durch axiales Ziehen an dem Handgriff 41 herausgenommen. Der Hilfsträger 17 ist jederzeit für weitere Ladevorgänge auf der gleichen wie auch auf der gegenüberliegenden Seite des rohrförmigen Querholms 21 einführbar.

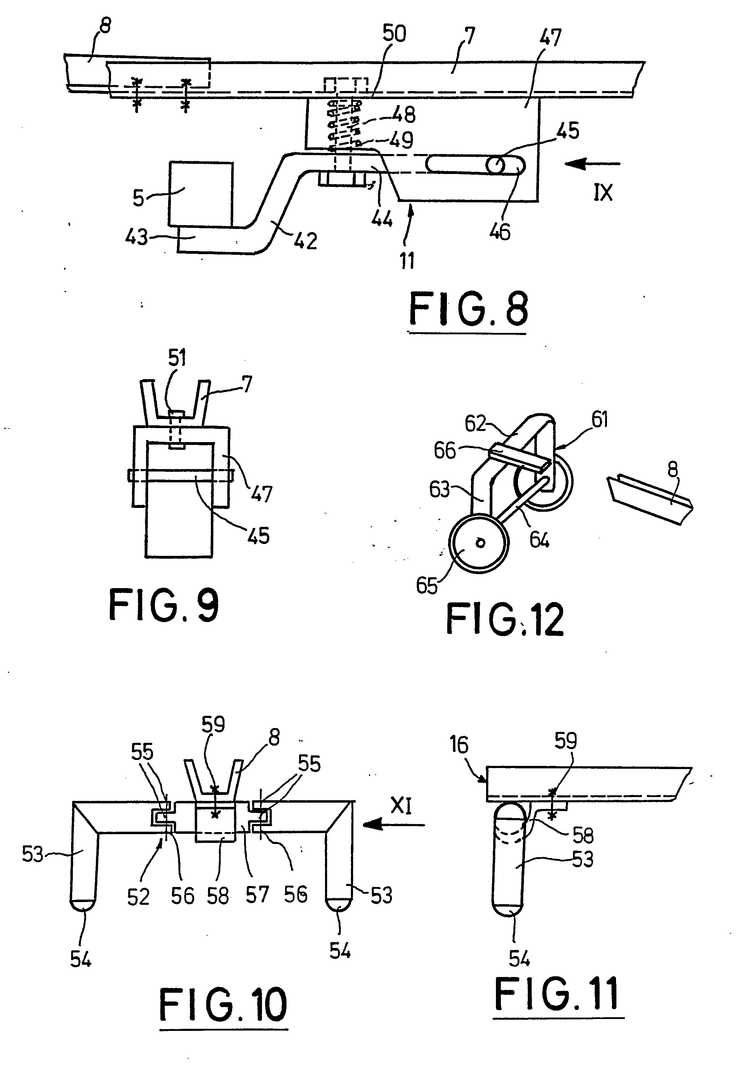

Das zweite Auflager 11 besteht aus einem S-förmig abgewinkelten Halteblech 42. Die untere Stufe 43 greift im montierten Zustand unter den hinteren Querholm 5, während die obere Stufe 44 über einen Bolzen 45 in einem Langloch 46 eines Aufnahmeblocks 47 gehalten ist. Der Aufnahmeblock 47 ist mit der Längsschiene 7 befestigt. Durch eine Schraube 48, die gegen die Wirkung einer Feder 49 wirkt, ist das Halteblech 42 mit der Längsschiene 7 innerhalb eines Langloches 50 arretierbar. Ein Längenausgleich bei unterschiedlich auf dem Fahrzeugdach 4 befestigten Querholmen 5 ist über eine Verschiebung des Haltebleches 42 innerhalb des Langloches 46 möglich. Wie die Fig. 9 zeigt, ist der Halteblock 47 im Querschnitt U-förmig gestaltet und durch Schrauben 51 unter die Längsschiene 7 montiert.

Eine Besonderheit der Vorrichtung 2 zur Be- und Entladung von Gütern ist die Stütze 52 am hinteren Ende der Verlängerungsschiene 8. Mit Hilfe dieser Stütze 52 steht die Schiene beim Beladen mit einem Gut gemäß Fig. 1 etwas vom Boden ab, was aufgrund der im seitlichen Abstand angeordneten Stützfüße 53 zu einer Standsicherheit beiträgt und das Kippen über diesen Endpunkt 16 erleichtert. Dazu besitzen die Stützfüße an ihrem unteren Ende Gleiter 54, um dadurch ein Verschieben der gesamten Vorrichtung 2 in der Längsrichtung des Kraftfahrzeuges 1 zu ermöglichen, wenn dies aus Gründen der präzisen Auflage des Schwenk- und Kipplagers 10 auf den Hilfsträger 17 erforderlich ist. Die beiden im rechten Winkel abgewinkelten Stützfüße sind über die Gelenke 55 mit eingesetzten Bolzen 56 einklappbar. Das Zwischengelenk 57 ist über eine entsprechend geformte Halterung 58 durch Schrauben 59 mit der Verlängerungsschiene 8 verbunden.

Die Verlängerungsschiene 8 ist entsprechend der Fig. 6 mit der Längsschiene 7 durch Schrauben 60 lösbar verbunden. Dadurch ist es möglich, nach vorgenommener Beladung des Dachträgers 3 die Verlängerungsschiene 8 aus der Führungsschiene 7 herauszunehmen. Anstelle der Verschraubung 60 ist es jedoch auch möglich, die Verlängerungsschiene 8 parallel unter die Längsschiene 7 zu verschieben und in der Endstellung zu arretieren.

Die Hilfseinrichtungen des Hilfsträgers 17 und der Verlängerungsschiene 7 mit der Stütze 52 können zusammen mit dem Transportgut im Kofferraum eines Fahrzeuges mittransportiert werden oder aber zusammen mit der gesamten Vorrichtung 2 und dem Dachträger 3 an einer geeigneten Stelle, wie beispielsweise innerhalb einer Garage, ohne großen Platzverlust abgestellt werden.

Natürlich ist es auch möglich, am hinteren Ende der Verlängerungsschiene 8 statt der Stütze 52 mit Gleitern 54 einen Laufwagen gemäß Figur 12 anzubringen. Dieser Laufwagen 61 besteht aus einem Bügel 62, an dessen Stege 63 jeweils beidseitig auf einer Achse 64 ein Laufrad 65 gelagert ist. Der Laufwagen 61 besitzt mittig auf dem Bügel 62 eine Anschlußschiene 66, die mit dem hinteren Ende der Verlängerungsschiene 8 beispielsweise durch Einstecken, Schrauben oder dergleichen verbunden ist.

Die Stütze 52 wie auch der Laufwagen 61 erlauben eine leichte Beladung und Entladung eines Fahrrades und verhindern ferner, daß die Längsschiene 7 und die Verlängerungsschiene 8 zusammen mit dem Ladegut umkippen kann.

Um ein sicheres Transportieren eines Fahrrades auf dem Dachträger auch dann zu gewährleisten, wenn vergessen wurde, den Grundkörper 31 auf dem Querholm 21 zu arretieren, ist zusätzlich auf der Lagerplatte 39 eine Arretiervorrichtung in Form eines Kugelkopfes 67 eingerichtet, dessen Schaft 69 federunterstützt in eine Rastöffnung 68 automatisch einfällt, wenn die Lagerplatte 39 auf dem Grundkörper 31 transportbereit eingeschwenkt wird. Die Rastöffnung 68 befindet sich in dem gezeigten Beispiel der Figur 7 in dem Grundkörper 31 und durchgehend im Querholm 21. Selbstverständlich sind auch andere geeignete Arretiervorrichtungen denkbar.

Durch die Anordnung von mehreren im Seitenabstand angeordneten Rastöffnungen 68 ist gleichzeitig die Einhaltung eines bestimmten Seitenabstandes der Fahrräder 6 auf dem Dachträger zueinander gewährleistet.

## Ansprüche

1. Kraftfahrzeugdachträger, der gleichzeitig eine Vorrichtung zum Be- und Entladen von Gütern auf dem Dachträger aufweist, wobei die Ladevorrichtung aus einer Verlängerungsschiene und der auf den Querholmen des Dachträgers aufliegenden Längsschiene besteht, die mit einem ersten Auflager auf einem ersten Querholm schwenk- und kippbar gelagert und mit einem zweiten Auflager auf einem zweiten Querholm lösbar befestigt ist, dadurch gekennzeichnet, daß das Schwenk- und Kipplager (10) auf einen in Verlängerung des oder parallel zum ersten Querholm (5) einsetzbaren Hilfsträger (17) aufsetzbar und in dessen Längsachse parallel zum oder auf dem Querholm (5) bis gegen einen Anschlag (38) verschiebbar und in der Endstellung verriegelbar ist.

2. Kraftfahrzeugdachträger nach Anspruch 1, dadurch gekennzeichnet, daß das Schwenk- und Kipplager (10) mit einer Halteeinrichtung (14) für Güter versehen ist.

3. Kraftfahrzeugdachträger nach den Ansprüchen 1 und 2,
dadurch gekennzeichnet,
daß das Schwenk- und Kipplager (10) aus einem hohlzylindrischen Grundkörper (31) besteht, der eine parallel zur Längsachse verlaufende untere Öffnung (32) von weniger als 180° Öffnungswinkel aufweist und auf seiner der Öffnung (32) diametral entgegengesetzten Oberfläche eine Lagerplatte (39) besitzt, die um eine senkrecht zur Längsachse des Grundkörpers (31) angeordnete Drehachse (40) schwenkbar ist und auf ihrer dem Grundkörper (31) abgewandten Oberfläche eine Halteeinrichtung (14) enthält, daß der Grundkörper (31) auf einem rohrförmigen Querholm (21) oder einem auf dem Querholm (5) befestigten rohrförmigen Träger (21) bis gegen einen Endanschlag (38) längsverschieblich gelagert und arretierbar ist, wobei in den rohrförmigen Träger (21) von der offenen Stirnseite (29) her der Hilfsträger (17) mit einem zylindrischen Ansatz (26) einsetzbar ist, der einen radial vorstehenden Raststift (27) für den Eingriff in eine korrespondierende Nut (25) des rohrförmigen Trägers aufweist und in axialer Verlängerung des Ansatzes (26) einen Zylinderkörper (17) besitzt, dessen Außendurchmesser dem des rohrförmigen Trägers (21) entspricht und der mit zumindest einer Längsfläche (30) versehen ist, die im eingerasteten Zustand des Raststiftes (27) senkrecht zur Längsachse des Zylinderkörpers (17) angeordnet ist.

4. Kraftfahrzeugdachträger nach den Ansprüchen 1 und 3,
dadurch gekennzeichnet,
daß die Arretierung des Schwenk- und Kipplagers (10) auf dem rohrförmigen Träger (21) durch eine federunterstützte Schraube (36) erfolgt, die unverlierbar in einer Öffnung (24, 34, 35) des Grundkörpers (31) gehalten und mit einer im rohrförmigen Träger (21) eingesetzten Haltemutter oder Scheibe (61) festspannbar ist.

5. Kraftfahrzeugdachträger nach den Ansprüchen 1 und 3,
dadurch gekennzeichnet,
daß zwischen der Lagerplatte (39) und dem Grundkörper (31) eine mit dem Grundkörper (31) fest verbundene zweite Platte (33) eingesetzt ist, welche die Drehachse (40) für die Lagerplatte (39) aufnimmt.

6. Kraftfahrzeugdachträger nach Anspruch 1,
dadurch gekennzeichnet,
daß die Verlängerungsschiene (7) mit ihrem vorderen Ende mit der Längsschiene (8) arretierbar ist und am freien Ende einen Ständer oder eine Stütze (52) aus zwei im Seitenabstand angeordneten und wahlweise einklappbaren Stützfüßen (53) aufweist.

7. Kraftfahrzeugdachträger nach Anspruch 6,
dadurch gekennzeichnet,
daß an den Stützfüßen (53) Gleiter (54) angebracht sind.

8. Kraftfahrzeugdachträger nach Anspruch 1,
dadurch gekennzeichnet,
daß die Befestigung des zweiten Auflagers (11) der Längsschiene (8) durch ein stufenförmig abgewinkeltes Halteblech (42) erfolgt, dessen untere Stufe (43) unter den Querholm (5) des Dachträgers (3) greift, während die obere Stufe (44) gegen Federkraft an einen mit der Längsschiene (7) verbundenen Aufnahmeblock (47) durch eine unverlierbare Schraube (48) befestigbar ist, wobei der Aufnahmeblock (47) gegenüber dem Halteblock (42) parallel zur Längsschiene (7) innerhalb der Abmessungen eines Langloches (46, 56) verschiebbar ist.

9. Kraftfahrzeugdachträger nach Anspruch 1,
dadurch gekennzeichnet,
daß an das freie hintere Ende der Verlängerungsschiene (8) ein ein- oder mehrachsiger Laufwagen (61) anschließbar ist.

10. Kraftfahrzeugdachträger nach den Ansprüchen 1 bis 5,
dadurch gekennzeichnet,
daß in die Lagerplatte (39) des Schwenk- und Kipplagers (10) eine Arretiereinrichtung (67) vorgesehen ist, die federunterstützt in Rastöffnungen (68) der zugewandten Oberfläche des Grundkörpers (31) oder des Rohrträgers (21) eingreift, wobei die Rastöffnungen (68) in einem Abstand zueinander angeordnet sind, der dem Seitenabstand der zu transportierenden Güter (6) entspricht.

11. Verwendung des Kraftfahrzeugdachträgers nach den Ansprüchen 1 bis 10 für das Be- und Entladen sowie den Transport von Fahrrädern.

FIG. 1

FIG. 2

# FIG. 3

# FIG. 4

EP 0 363 692 A2

# FIG. 5

# FIG. 6

FIG.7

**FIG. 8**

**FIG. 9**

**FIG. 12**

**FIG. 10**

**FIG. 11**